# EUROPEAN PATENT SPECIFICATION

(11) **EP 4 213 556 B1**
(45) Date of publication and mention of the grant of the patent: **09.12.2026**
(21) Application number: 20957175.1
(22) Date of filing: 15.10.2020
(51) Int. Cl.: H04L 5/00, H04W 72/04, H04W 72/21

(54) **UPLINK CONTROL INFORMATION SENDING METHOD AND RECEIVING METHOD, AND COMMUNICATION APPARATUS**
VERFAHREN ZUM SENDEN UND EMPFANGEN VON UPLINK-STEUERUNGSINFORMATIONEN SOWIE KOMMUNIKATIONSVORRICHTUNG
PROCÉDÉ D'ENVOI ET PROCÉDÉ DE RÉCEPTION D'INFORMATIONS DE COMMANDE DE LIAISON MONTANTE, ET APPAREIL DE COMMUNICATION

(43) Date of publication of application: 19.07.2023
(73) Proprietor: Huawei Technologies Co., Ltd., Shenzhen, Guangdong 518129 (CN)
(72) Inventor: JIA, Qiong, Shenzhen, Guangdong 518129 (CN); ZHANG, Jiayin, Shenzhen, Guangdong 518129 (CN)
(74) Representative: Pfenning, Meinig & Partner mbB
(86) International application number: PCT/CN2020/121319
(87) International publication number: WO 2022/077396

(56) References cited:
- WO-A1-2020/154930
- CN-A- 109 275 191
- CN-A- 109 756 985
- CN-A- 110 149 703
- CN-A- 110 809 320
- CN-A- 110 933 751
- CN-A- 111 670 596
- US-A1- 2019 036 753
- US-A1- 2021 352 672
- NOKIA NETWORKS: "Basic system design for UL NB-IoT", 3GPP DRAFT; R1-160041, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Budapest, HU; 20160118 - 20160120, 11 January 2016 (2016-01-11), Mobile Competence Centre ; 650, route des Lucioles ; F-06921 Sophia-Antipolis Cedex ; France , XP051064626
- QUALCOMM INCORPORATED: "uplink enhancements for URLLC in unlicensed controlled environments", 3GPP DRAFT; R1-2006801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051918251

## Description

### TECHNICAL FIELD

This application relates to the field of wireless communication technologies, and in particular, to an uplink control information sending method and receiving method, and a communication apparatus.

### BACKGROUND

A terminal may send uplink control information (uplink control information, UCI) and/or uplink data to a network device. Currently, the terminal maps, in an order of frequency domain first and then time domain, for example, to-be-sent UCI to a resource allocated by the network device to the terminal. For example, the to-be-sent UCI is first mapped to each resource element (resource element, RE) of the allocated resource until the to-be-sent UCI is mapped to an entire uplink frequency domain bandwidth, and then the to-be-sent UCI is sequentially mapped based on symbols in time domain. However, in some scenarios, a resource actually available to the terminal may be inconsistent with the resource allocated by the network device to the terminal. For example, for an unlicensed resource allocated by the network device to the terminal, a plurality of terminals fairly contend for and use the unlicensed spectrum by using same or similar principles, and a resource actually available to each terminal is an idle resource in the unlicensed spectrum. In this case, if a current UCI mapping method is still used, in other words, in frequency domain, if the UCI is mapped to all frequency domain resources corresponding to the allocated resource, the UCI is damaged, in other words, the network device cannot correctly receive the UCI sent by the terminal.

US 2019036753 A1 discloses a method for transmitting a reference signal, a terminal device, and a network device, so as to improve demodulation performance of a random access preamble sequence that occupies a discrete frequency domain resource.

WO 2020154930 A1 discloses a wireless communication method, a terminal device, and a network device, which can determine an interlace set for uplink transmission according to a specific frequency domain reference point, and further, can perform uplink transmission on frequency domain resources included in the determined interlace set.

### SUMMARY

This application provides an uplink control information sending method according to claim 1, an uplink control information receiving method according to claim 7, a communication apparatus according to claim 13, a computer-readable storage medium according to claim 14 and a computer program product according to claim 15, to map UCI to an idle resource in an allocated resource by using a basic frequency domain unit as a granularity, thereby ensuring that the UCI is not damaged.

The object of the invention is achieved by the subject-matter of the independent claims. The dependent claims describe advantageous embodiments. The scope of protection of the invention is limited by the appended claims.

### BRIEF DESCRIPTION OF DRAWINGS

FIG. 1 is a schematic diagram of a mapping relationship between different channels;
FIG. 2 is a schematic diagram of mapping UCI to a PUSCH in the conventional technology;
FIG. 3 is a schematic diagram of dividing a resource allocated by a network device to a terminal into a plurality of basic frequency domain units;
FIG. 4 is a schematic diagram of an example of mapping UCI to a PUSCH according to an embodiment of this application;
FIG. 5 is a schematic diagram of an applicable network architecture according to an embodiment of this application;
FIG. 6 is a schematic flowchart of a UCI sending method and a UCI receiving method according to an embodiment of this application;
FIG. 7 is a schematic diagram of another example of mapping UCI to a PUSCH according to an embodiment of this application;
FIG. 8 is a schematic diagram of repeatedly mapping UCI to a PUSCH according to an embodiment of this application;
FIG. 9 is a schematic diagram of PUSCH resources corresponding to a plurality of serving cells of a terminal according to an embodiment of this application;
FIG. 10 is a schematic diagram of a structure of a communication apparatus according to an embodiment of this application;
FIG. 11 is a schematic diagram of another structure of a communication apparatus according to an embodiment of this application;
FIG. 12 is a schematic diagram of another structure of a communication apparatus according to an embodiment of this application; and
FIG. 13 is a schematic diagram of another structure of another communication apparatus according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

A terminal may perform uplink transmission based on a scheduling indication of a network device. Certainly, in a scenario in which scheduling free (also referred to as grant free or configured grant) uplink transmission is supported, the terminal may alternatively actively perform uplink transmission. That the terminal performs uplink transmission means that the terminal sends UCI and/or uplink data to the network device. To send the UCI (or the uplink data), the terminal needs to map the UCI (or the uplink data) to a resource. This relates to mapping between channels.

For an uplink, an uplink logical channel, an uplink transport channel, and an uplink physical channel are defined in a new radio (new radio, NR) system. The uplink logical channel includes a common control channel (common control channel, CCCH), a dedicated control channel (dedicated control channel, DCCH), a dedicated traffic channel (dedicated traffic channel, DTCH), and the like. Usually, the CCCH is used to transmit control information between a terminal and a network device when the terminal does not establish a radio resource control (radio resource control, RRC) connection. The DCCH is used to specify, for a terminal that establishes an RRC connection, dedicated control information transmission of the terminal. The DTCH is used to specify information transmission of a terminal. The uplink transport channel may include an uplink shared channel (uplink shared channel, UL-SCH), a random access channel (random access channel(s), RACH), and the like. The uplink physical channel may include a physical random access channel (physical random access channel, PRACH) used by a terminal to initiate random access, a PUSCH mainly used for uplink data transmission, a PUCCH mainly used for UCI transmission, and the like.

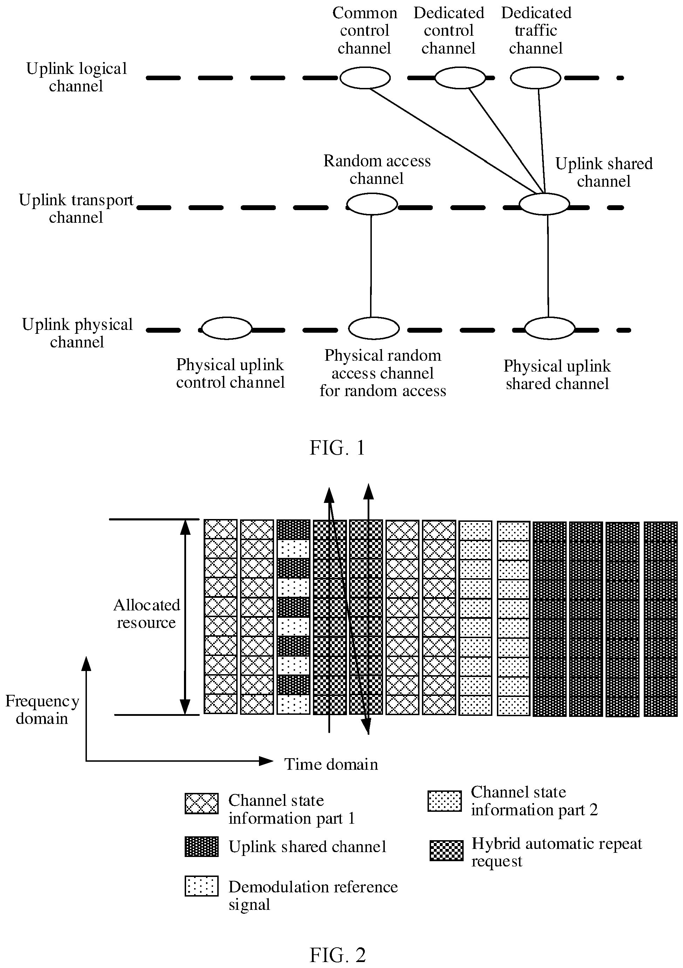

There is a mapping relationship, shown in FIG. 1, between different channels. That is, all uplink logical channels are mapped to the uplink shared channel, for example, the uplink CCCH, DCCH, and DTCH are all mapped to the UL-SCH, and the UL-SCH is further mapped to the PUSCH. No logical channel corresponds to the RACH channel. The RACH channel is mapped to the PRACH channel. It should be noted that, when UCI transmission and uplink data transmission that are configured or indicated by the network device overlap in terms of time, the terminal may map UCI to a PUSCH for transmission. In this case, it may be considered that the UCI is multiplexed in the PUSCH (this is also referred to as UCI multiplexing in PUSCH).

The UCI may include one or more of the following information: channel state information (channel state information, CSI), an acknowledgment (acknowledgment, ACK)/a negative acknowledgment (negative acknowledgment, NACK) that is used to determine whether data is correctly received and that is also referred to as hybrid automatic repeat request (hybrid automatic repeat request, HARQ) information (collectively referred to as HARQ information below), and a scheduling request (scheduling request, SR). It should be understood that, the terminal sends CSI to the network device, and the network device may select an appropriate scheduling parameter such as a modulation and coding scheme based on the CSI, thereby improving transmission reliability. The terminal initiates an SR to the network device, to request the network device to allocate a resource used for uplink transmission to the terminal.

In addition, the UCI may further include UCI for scheduling free transmission (configured grant uplink control information, CG-UCI), and the CG-UCI may also be considered as scheduling free dedicated UCI. It should be understood that scheduling free uplink transmission means that the terminal actively performs uplink transmission. Therefore, the terminal needs to notify, by using UCI, the network device of information, such as a HARQ process, a redundancy version (redundancy version, RV), and a new transmission indicator (new data indicator, NDI), corresponding to corresponding uplink transmission, so that the network device can correctly accept uplink transmission.

It may be understood that, in some scenarios, the UCI means uplink control information, and the UL-SCH means uplink data. In some scenarios, the terminal device maps the UCI and the UL-SCH to the PUSCH together. In this embodiment of this application, because a same mapping principle is used, the UL-SCH may be considered as special UCI for ease of unified description. It should be understood that this description does not constitute a substantive limitation, that is, this application is applicable to a scenario of mapping UCI and/or uplink data.

FIG. 2 is a schematic diagram of mapping UCI to a PUSCH. One grid in FIG. 2 indicates one symbol in time domain. In NR, when the UCI is mapped to the PUSCH, HARQ information or CG-UCI, CSI, and a UL-SCH may be sequentially mapped to the PUSCH. In other words, a mapping order of a plurality of types of UCI is HARQ information or CG-UCI → CSI → UL-SCH. Each type of UCI is mapped in an order of frequency domain first and then time domain, and a demodulation reference signal (demodulation reference signal, DMRS) is dodged when some types of UCI are mapped. HARQ information shown by an arrow direction in FIG. 2 is used as an example. The HARQ information is first mapped from a start time domain position (corresponding to an OFDM symbol) to each resource element (resource element, RE) of an allocated uplink resource (for example, a BWP) until the HARQ information is mapped to an entire uplink frequency domain bandwidth; and then is sequentially mapped in time domain based on the OFDM symbol. Different types of UCI may correspond to different start time domain positions. For example, a start time domain position corresponding to each of the HARQ information and/or the CG-UCI is the first symbol behind the DMRS symbol, and a start time domain position corresponding to the CSI is the first orthogonal frequency division multiplexing (orthogonal frequency division multiplexing, OFDM) symbol. It should be noted that in FIG. 2, for example, the CSI includes a CSI part 1 and a CSI part 2.

As shown in FIG. 2, a terminal may perform UCI mapping on an entire allocated frequency domain resource (which may be alternatively understood as an entire scheduled frequency domain resource). For example, the terminal performs UCI mapping on a licensed spectrum resource allocated by a network device. However, as a mobile data traffic volume continuously increases, spectrum resources are strained, and network deployment and traffic transmission performed by using only a licensed spectrum resource may not meet an existing traffic volume requirement. The 3rd generation partnership project (the 3rd generation partnership project, 3GPP) is prepared to introduce licensed-assisted access (License Assisted Access, LAA) and enhanced licensed-assisted access (enhanced LAA, eLAA for short) technologies to communication systems such as long term evolution (Long Term Evolution, LTE), that is, deploy an LTE/LTE-A system on an unlicensed spectrum in a non-standalone (non-standalone) manner, to maximally use an unlicensed spectrum resource through assistance of a licensed spectrum, so that the unlicensed spectrum resource can be maximally used.

On an unlicensed spectrum, a terminal usually uses/shares a radio resource in a contention manner. As a result, a frequency domain resource actually used by the terminal is different from a frequency domain resource allocated (scheduled) to the terminal. If UCI is mapped to a PUSCH resource still in the foregoing mapping manner in FIG. 2, the UCI may fail to be sent or the UCI may be damaged.

For example, on an unlicensed spectrum, a plurality of terminals fairly contend for and use an unlicensed spectrum resource by using same or similar principles. Generally, before sending a signal, a terminal first listens, whether the unlicensed spectrum is idle, for example, determines a busy/idle status of the unlicensed spectrum based on a value of received power on the unlicensed spectrum; and if the received power is less than a specific threshold, the terminal considers that the unlicensed spectrum is in an idle state and the terminal can send a signal on the unlicensed spectrum; otherwise, the terminal does not send a signal on the unlicensed spectrum. This listen before talk mechanism is referred to as listen before talk (listen before talk, LBT) or channel access (channel access). When performing LBT, a terminal performs listening in a specific frequency domain resource; and if energy received in the frequency domain resource is less than a threshold, the terminal considers that the frequency domain resource is not occupied by another terminal and the terminal can send a signal on the frequency domain resource; otherwise, the terminal cannot send a signal on the frequency domain resource. It should be understood that the terminal performs LBT at a specific frequency domain unit granularity, that is, the terminal performs LBT based on a frequency domain unit of a specific size. For ease of description, in this specification, the frequency domain unit of this size is referred to as a basic frequency domain unit, that is, the terminal performs LBT by using the basic frequency domain unit as a granularity.

Generally, a common LBT mechanism is a Cat 2 LBT mechanism that is based on non-random back-off and a Cat 4 LBT mechanism that is based on random back-off. In the Cat 2 LBT mechanism that is based on non-random back-off, a device listens on a channel in a slot of a fixed length (for example, 25 microseconds or 16 microseconds) in a basic frequency domain unit; and if an LBT basic frequency domain unit is idle in the slot, the device can send a signal in the basic frequency domain unit; otherwise, the device cannot send a signal in the LBT basic frequency domain unit. In the Cat 4 LBT mechanism that is based on random back-off, a device first determines a random number, where the random number may be used to determine time during which the device needs to perform listening; and within the determined listening time, if a basic frequency domain unit is idle, the device can send a signal in the basic frequency domain unit; otherwise, the device cannot send a signal in the basic frequency domain unit.

A resource allocated by a network device to a terminal may include one or more basic frequency domain units. The basic frequency domain unit may be one carrier or a bandwidth part (bandwidth part, BWP) of one carrier, or may be a BWP or a sub-band. The basic frequency domain unit may be a set of consecutive resource blocks (resource block, RB set) or a set of consecutive subcarriers, or may be a frequency domain resource of a fixed bandwidth size, for example, a frequency domain resource whose bandwidth is 20 MHz.

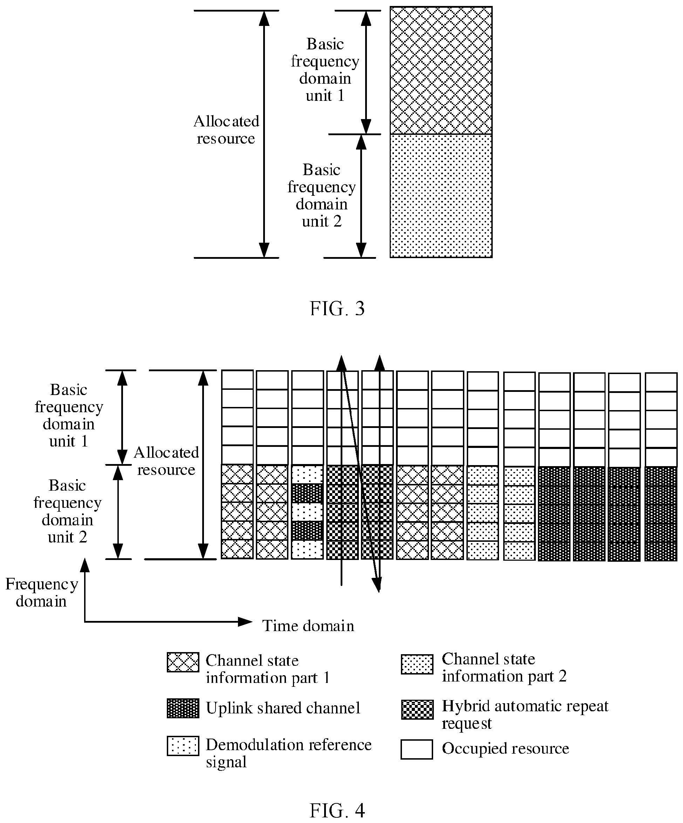

In an NR unlicensed (NR unlicensed, NRU) system, a carrier bandwidth or a BWP is usually an integer multiple of a basic frequency domain unit. However, an unlicensed spectrum resource is a public resource, and therefore a result of performing LBT by each terminal is uncertain, that is, the terminal may determine, by performing LBT, that a plurality of basic frequency domain units in the unlicensed spectrum resource may be idle, or may be occupied by another terminal. As shown in FIG. 3, a resource (for example, an unlicensed spectrum resource) allocated by a network device to a terminal is a BWP, and the BWP includes two basic frequency domain units: a basic frequency domain unit 1 and a basic frequency domain unit 2. It is assumed that the basic frequency domain unit 1 is occupied by another terminal, and the basic frequency domain unit 2 is idle. In this case, the terminal can send a signal on the basic frequency domain unit 2.

However, according to the manner, shown in FIG. 2, of mapping UCI to a PUSCH, the UCI may fail to be sent or the UCI may be damaged. For example, FIG. 4 is a schematic diagram of mapping UCI to a PUSCH. A difference between FIG. 4 and FIG. 2 lies in that a scheduled resource shown in FIG. 4 includes two basic frequency domain units: a basic frequency domain unit 1 and a basic frequency domain unit 2. The basic frequency domain unit 1 is occupied by another terminal, and the basic frequency domain unit 2 is idle. According to the mapping manner in FIG. 2, the UCI is mapped to an entire scheduled resource. However, because LBT is performed on a terminal side, the network device cannot change a scheduling indication in a timely manner. When the terminal determines that the basic frequency domain unit 2 is idle, the terminal sends the UCI only in the basic frequency domain unit 2. In this case, the UCI is damaged. Alternatively, it may be considered that the terminal sends the UCI only in the basic frequency domain unit 2, and the network device receives the UCI based on the entire scheduled resource. In this case, the network device cannot correctly receive the UCI.

In view of this, the embodiments of this application provide a UCI sending method. In the method, a terminal may map UCI to a scheduled resource based on a basic frequency domain unit. A same type of UCI is mapped in a basic frequency domain unit, that is, a same type of UCI is not simultaneously mapped to a plurality of basic frequency domain units. In this way, even if the terminal can send the UCI on only a part of the scheduled resource, it can be ensured that the UCI is not damaged.

The UCI sending method provided in the embodiments of this application may be applied to an NR system, or may be applied to another communication system. For example, the communication system may be an internet of things (internet of things, IoT) system, a vehicle-to-everything (vehicle-to-everything, V2X) system, a narrowband internet of things (narrowband internet of things, NB-IoT) system, or an LTE system, or may be an LTE-NR hybrid architecture, or a new communication system emerging in future communication development. UCI mapping provided in the embodiments of this application can be used provided that uplink control information is sent in the communication system.

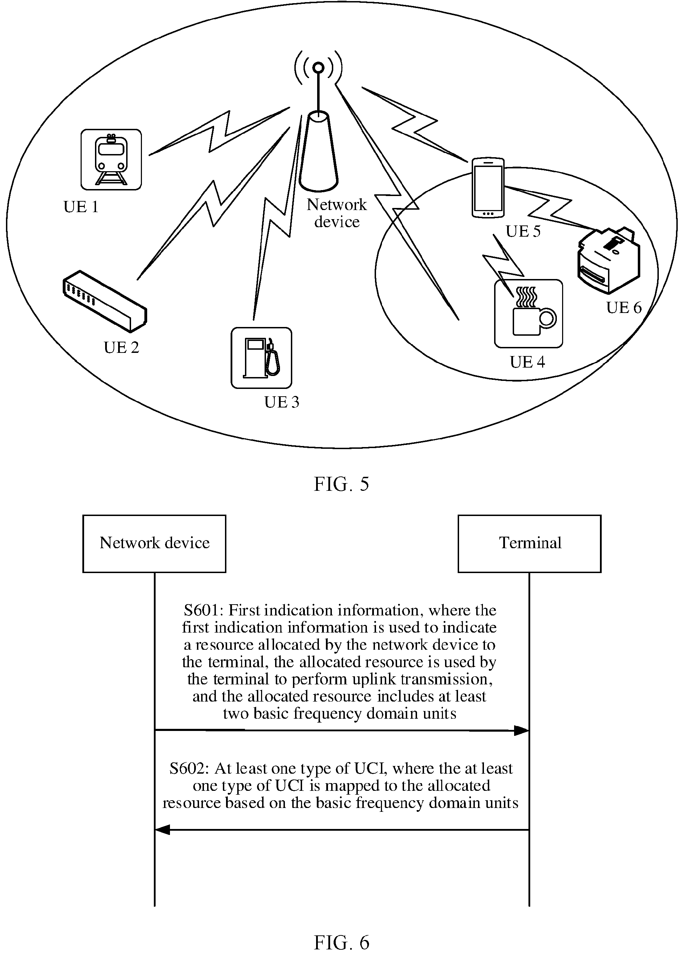

FIG. 5 shows an applicable communication system according to an embodiment of this application. The communication system includes a network device and six terminals, for example, user equipment (user equipment, UE). The six UEs are UE 1 to UE 6. In the communication system, the UE 1 to the UE 6 may send signals to the network device on uplinks, and the network device may receive the uplink signals sent by the UE 1 to the UE 6. In addition, the UE 4 to the UE 6 may also constitute a communication subsystem. The network device may send downlink signals to the UE 1, the UE 2, the UE 3, and the UE 5 on downlinks. The UE 5 may send signals to the UE 4 and the UE 6 on sidelinks (sidelink, SL) between the terminals based on a D2D technology. FIG. 5 is merely a schematic diagram. A type of the communication system, a quantity of devices included in the communication system, a type of the device, and the like are not specifically limited in this application.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may learn that, with evolution of the network architecture and emergence of new service scenarios, the technical solutions provided in the embodiments of this application are also applicable to similar technical problems.

The UCI sending method provided in the embodiments of this application may be applied to the network architecture shown in FIG. 5. The method may be performed by two communication apparatuses. For example, the two communication apparatuses may be the network device and any UE in FIG. 5. The network device is an entity configured to transmit or receive a signal on a network side, and is a device that enables a terminal-side device to access a wireless network in a communication system. Generally, the network device is connected to a core network by using a wired link (for example, a fiber-optic cable), and is, for example, a next generation NodeB (generation Node B, gNodeB). The network-side device may be responsible for receiving data from a core network and forwarding the data to a wireless backhaul device, or receiving data from the wireless backhaul device and forwarding the data to the core network. The network device may be a device configured to communicate with a mobile device. The network device may be an AP in a wireless local area network (wireless local area network, WLAN) or an evolved NodeB (evolved Node B, eNB or eNodeB) in long term evolution (long term evolution, LTE), or may include a next generation NodeB (next generation node B, gNB) in a 5G NR system, a relay station, an access point, a vehicle-mounted device, a wearable device, a network device in a future 5G network, a network device in a future evolved public land mobile network (public land mobile network, PLMN), or a gNodeB/gNB in an NR system. The following uses an example in which the network device is a gNB.

The gNB may include an antenna, a baseband unit (baseband unit, BBU), and a remote radio unit (remote radio unit, RRU). The BBU may be connected to the RRU by using a common public radio interface (common public radio interface, CPRI), an enhanced CPRI (enhanced CPRI, eCPRI), or the like, and the RRU may be connected to the antenna by using a feeder. The antenna may be a passive antenna, the antenna is separated from the RRU, and the antenna may be connected to the RRU by using a cable. Alternatively, the antenna may be an active antenna unit (active antenna unit, AAU), that is, an antenna unit of the AAU and the RRU are integrated together. The AAU implements some physical layer processing functions, radio frequency processing, and a function related to an active antenna.

In some deployments, the gNB may include a centralized unit (centralized unit, CU) and a distributed unit (distributed unit, DU). The CU implements some functions of the gNB, and the DU implements some functions of the gNB. For example, the DU may be configured to implement sending/receiving of a radio frequency signal, conversion between a radio frequency signal and a baseband signal, and some baseband processing. The CU may be configured to perform baseband processing, control the base station, and the like. In some embodiments, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. Information at the RRC layer eventually becomes information at the PHY layer, or is converted from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

The terminal may also be referred to as a terminal device, and is a wireless terminal device that can receive scheduling and indication information from a network device. The terminal may be a device that provides a user with voice and/or data connectivity, a handheld device with a wireless connection function, or another processing device connected to a wireless modem.

The terminal may communicate with one or more core networks or the Internet by using a radio access network (for example, a radio access network, RAN), and exchange voice and/or data with the RAN. The terminal may include UE, a wireless terminal device, a mobile terminal device, a device-to-device (device-to-device, D2D) communication terminal device, a V2X terminal device, a machine-to-machine/machine type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (also referred to as a "cellular" phone), a computer with a mobile terminal device, or a portable, pocket-sized, handheld, or computer built-in mobile apparatus. For another example, the terminal may include a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future-evolved public land mobile network (public land mobile network, PLMN), a vehicle device in vehicle to everything (vehicle to everything, V2X), or customer premises equipment (customer premises equipment, CPE). For another example, the terminal may include a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Alternatively, the terminal may include a limited device, for example, a device with relatively low power consumption, a device with a limited storage capability, or a device with a limited computing capability. For example, the terminal includes an information sensing device such as a barcode or radio frequency identification (radio frequency identification, RFID) sensor, a global positioning system (global positioning system, GPS), or a laser scanner.

By way of example, and not limitation, in the embodiments of this application, the terminal device may be alternatively a wearable device. The wearable device may also be referred to as a wearable intelligent device, an intelligent wearable device, or the like, and is a general term of wearable devices that are intelligently designed and developed for daily wear by applying a wearable technology, for example, glasses, gloves, watches, clothes, and shoes. The wearable device is a portable device that is directly worn on a body or integrated into clothes or an accessory of a user. The wearable device is not merely a hardware device, and also implements a powerful function through software support, data exchange, and cloud interaction. In a broad sense, the wearable intelligent device includes a full-featured and large-sized device that can implement all or a part of functions without depending on a smartphone, for example, a smart watch or smart glasses, and includes a device that is dedicated to only one type of application function and that needs to be used in cooperation with another device such as a smartphone, for example, various smart bands, smart helmets, or smart jewelry for monitoring physical signs. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In the embodiments of this application, the network device and the terminal each may be deployed on land, and include an indoor or outdoor device, or a handheld or vehicle-mounted device; may be deployed on a water surface; or may be deployed on an aircraft, a balloon, or a satellite in the air. Application scenarios of the network device and the terminal are not limited in the embodiments of this application.

For ease of understanding the embodiments of this application, the following describes, in detail with reference to the accompanying drawings, the UCI sending method provided in the embodiments of this application. In the following description process, for example, the method is applied to the communication system shown in FIG. 5. In addition, the method may be performed by two communication apparatuses. For example, the two communication apparatuses are a first communication apparatus and a second communication apparatus. For ease of description, the following uses an example in which the method is performed by a terminal and a network device, namely, an example in which the first communication apparatus is the terminal and the second communication apparatus is the network device. It should be noted that, the embodiments of this application merely use the communication system in FIG. 5 as an example, and are not limited to this scenario. It should be noted that the "resource" in the embodiments of this application may include at least one time unit in time domain, and include at least one frequency domain unit in frequency domain. The time unit may be a slot, a subframe, a symbol (symbol), or the like. The frequency domain unit may be a subchannel (subchannel), an RB, an RE, or the like. It should be understood that the subchannel includes one or more RBs.

It should be noted that the technical solutions provided in the embodiments of this application are specific to a scenario in which a resource actually used by the terminal during uplink transmission is different from a resource allocated (scheduled) by the network device to the terminal. For example, the network device schedules an unlicensed spectrum resource for the terminal. Because the terminal performs LBT, the terminal determines that an available resource is a part of the unlicensed spectrum resource. For another example, in some possible scenarios, because a plurality of devices contend for a resource and a conflict may exist, only a part of the resource is available for some devices. For ease of description, in the following description, for example, a resource used by the terminal to perform uplink transmission is an unlicensed spectrum resource. Without a conflict, the unlicensed spectrum resource in the embodiments of this application may be replaced with a licensed spectrum resource. It should be understood that, if a resource used by the terminal to perform uplink transmission is a licensed spectrum resource, provided that a resource actually used by the terminal is different from a licensed spectrum resource scheduled by the network device for the terminal, UCI may also be sent by using the technical solutions provided in the embodiments of this application. In addition, in some special scenarios, even if a resource actually available to the terminal is the same as a resource scheduled by the network device for the terminal, UCI may still be sent by using the technical solutions provided in the embodiments of this application. In this way, the terminal sends the UCI more flexibly.

FIG. 6 is a schematic flowchart of a UCI sending method according to an embodiment of this application. A specific process of the method is described as follows:

S601: A network device sends first indication information to a terminal, where the first indication information is used to indicate a resource allocated by the network device to the terminal, the allocated resource is used by the terminal to perform uplink transmission, and the allocated resource belongs to at least two basic frequency domain units.

S602: The terminal sends at least one type of UCI to the network device on the allocated resource, where the at least one type of UCI is mapped to the allocated resource based on the basic frequency domain unit.

In this embodiment of this application, the first indication information may be used to configure or indicate the resource (also referred to as a scheduled resource in the text) allocated by the network device to the terminal, and the scheduled resource may be used by the terminal to perform uplink transmission. For example, the first indication information may be used to configure a scheduled-resource quantity, a time domain position of the scheduled resource, a frequency domain position of the scheduled resource, or the like. It should be noted that, a specific name of the first indication information is not limited in this embodiment of this application. For example, the first indication information may also be referred to as scheduling indication information. A specific implementation of the first indication information is not limited in this embodiment of this application. The first indication information may be carried in downlink control information (downlink control information, DCI) or radio resource control (radio resource control, RRC) signaling, provided that the scheduled resource can be configured or indicated.

In this embodiment of this application, the scheduled resource may be a PUSCH resource, or may be a PUCCH resource. For ease of description, in the following, for example, a resource used by the terminal to perform uplink transmission is a PUSCH resource. Without a conflict, the PUSCH resource in this embodiment of this application may be replaced with the PUCCH resource. The following uses the PUSCH resource as an example.

The terminal may determine, based on the first indication information, the scheduled resource used to perform uplink transmission. If the scheduled resource is an unlicensed spectrum resource, before performing uplink transmission, the terminal may perform LBT to determine an idle resource in the scheduled resource, and then send the UCI on the idle resource, that is, the terminal maps the to-be-sent UCI to the idle resource and sends the UCI to the network device. This embodiment of this application aims to ensure that even if the terminal can send the UCI on only a part (the idle resource) of the scheduled resource, the UCI is not damaged, so that the network device correctly receives the UCI on the scheduled resource.

In view of this, in this embodiment of this application, the terminal maps the at least one type of to-be-sent UCI to the idle resource in the scheduled resource by using the basic frequency domain unit as a granularity. It should be understood that the scheduled resource may include one or more basic frequency domain units. Optionally, the scheduled resource belongs to one or more basic frequency domain units. In this embodiment of this application, it may be determined that one type of UCI is mapped in one basic frequency domain unit, that is, a same type of UCI is not mapped across basic frequency domain units, in other words, a same type of UCI is not mapped to a plurality of basic frequency domain units.

The terminal may map a plurality of types of UCI to at least one basic frequency domain unit based on a priority order of the plurality of types of UCI, or may map a plurality of types of UCI to at least one basic frequency domain unit based on a priority order in which the at least one basic frequency domain unit is mapped. Alternatively, it may be considered that the UCI has a priority, and the at least one basic frequency domain unit has a priority. In this embodiment of this application, the priority of the UCI may be determined based on transmission reliability. For example, a priority of a HARQ is higher than a priority of CSI, a priority of CG-UCI is higher than the priority of the CSI, and the priority of the CSI is higher than a priority of a UL-SCH. If the CSI includes a CSI-part 1 and a CSI-part 2, a priority of the CSI-part 1 is higher than a priority of the CSI-part 2. Likewise, priorities of a plurality of basic frequency domain units may be determined based on transmission reliability. For example, it may be determined that a priority of a first basic frequency domain unit is higher than a priority of a remaining basic frequency domain unit. The first basic frequency domain unit may be a frequency domain unit in which LBT is mainly performed, for example, a frequency domain unit in which LBT is performed according to a Cat 4 LBT mechanism. Alternatively, the first basic frequency domain unit has a higher idle probability than the remaining basic frequency domain unit.

Because a plurality of types of UCI are mapped based on priorities of the UCI and/or a priority of at least one basic frequency domain unit, a priority order may also be referred to as a mapping order. For ease of distinguishing, in this specification, a mapping order of a plurality of types of UCI is referred to as a first mapping order, and an order in which a plurality of basic frequency domain units are mapped is referred to as a second mapping order. Implementations of the first mapping order and the second mapping order are not limited in this embodiment of this application. The following separately describes possible implementations of the first mapping order and the second mapping order.

For the first mapping order, in some embodiments, the first mapping order may be predefined in this embodiment of this application. For example, the first mapping order may be HARQ information → CSI → UL-SCH. For another example, if CG-UCI exists, the first mapping order may be HARQ information and/or CG-UCI → CSI → UL-SCH. The terminal may map a plurality of types of UCI to at least one basic frequency domain unit of the idle resource in the scheduled resource based on the predefined first mapping order. Alternatively, in this embodiment of this application, priorities of a plurality of types of UCI may be predefined. For example, a priority of HARQ information is higher than a priority of CSI, and the priority of the CSI is higher than a priority of a UL-SCH. The terminal may map the plurality of types of UCI based on the priorities of the plurality of types of UCI. That is, the priorities of the plurality of types of UCI are used as the first mapping order, and it may also be considered that the first mapping order may be used to indicate the priorities of the plurality of types of UCI. This manner is relatively simple and requires no signaling exchange between the terminal and the network device, so that signaling overheads can be reduced as much as possible.

In some other embodiments, the network device may indicate the first mapping order. In this manner, the first mapping order may be determined based on a requirement. This is more flexible. For example, the network device may send second indication information to the terminal, where the second indication information may be used to indicate priorities of a plurality of types of UCI, namely, the first mapping order. Similar to the first indication information, the second indication information may also be carried in DCI and/or RRC signaling. In a possible implementation, the second indication information may directly indicate the first mapping order, or may indirectly indicate the first mapping order. This is not limited in this embodiment of this application.

For example, the second indication information may include priority indexes of the plurality of types of UCI. For example, a correspondence shown in Table 1 may be predefined. In Table 1, a smaller priority index indicates a higher priority. The first mapping order may be a descending order of the priorities, that is, the first mapping order is an order of HARQ information and/or CG-UCI → CSI → UL-SCH. In this manner, the second indication information directly indicates the first mapping order. This is relatively simple. Certainly, in some embodiments, the second indication information may alternatively carry content in Table 1.

**Table 1**

| Priority index | UCI |
|---|---|
| 1 | HARQ information/CG-UCI |
| 2 | CSI |
| 3 | UL-SCH |

For example, the second indication information may be used to indicate a mapping pattern (pattern) of the UCI, and different mapping patterns correspond to different first mapping orders. For example, a correspondence, shown in Table 2, between a mapping pattern and a first mapping order of UCI may be predefined. The second indication information may carry an index used to indicate a mapping pattern, and a first mapping order is indicated by using the mapping pattern. Because a plurality of first mapping orders may be defined in Table 2, compared with a plurality of tables, less space may be required for storing a predefined first mapping order.

**Table 2**

| Mapping pattern | First mapping order |
|---|---|
| 1 | HARQ/CG-UCI → CSI → UL-SCH |
| 2 | CSI → HARQ/CG-UCI → UL-SCH |

Similar to the foregoing implementation of the first mapping order, in this embodiment of this application, the second mapping order may be predefined, or the network device may indicate the second mapping order to the terminal.

In an example, in this embodiment of this application, the second mapping order is predefined. For example, the second mapping order is an ascending order of indexes of the basic frequency domain units, or the second mapping order is a descending order of the indexes of the basic frequency domain units. That is, a priority of a basic frequency domain unit with a larger index is higher than a priority of a basic frequency domain unit with a smaller index, or a priority of a basic frequency domain unit with a smaller index is higher than a priority of a basic frequency domain unit with a larger index.

Certainly, the second mapping order may be alternatively another possible predefined order. For example, the second mapping order is a first basic frequency domain unit → a remaining basic frequency domain unit other than the first basic frequency domain unit in the plurality of basic frequency domain units. That is, a priority of the first basic frequency domain unit is the highest, and a priority of the remaining basic frequency domain unit is lower than the priority of the first basic frequency domain unit. Herein, the first basic frequency domain unit may be a frequency domain unit listened by the terminal in one time unit, for example, a frequency domain unit in which LBT is mainly performed, for example, a frequency domain unit in which LBT is performed according to a Cat 4 LBT mechanism. Alternatively, the first basic frequency domain unit has a higher idle probability than the remaining basic frequency domain unit. For example, the idle probability of the first basic frequency domain unit is greater than a preset threshold. If a plurality of remaining basic frequency domain units are included, priorities of the remaining basic frequency domain units, namely, an order in which the remaining basic frequency domain units are mapped, may be random, that is, the terminal randomly selects the remaining basic frequency domain units to map the UCI. Alternatively, the priorities of the remaining basic frequency domain units may be predefined, that is, the terminal selects, based on the predefined priorities, the remaining basic frequency domain units to map the UCI. For example, the terminal selects, in ascending order of indexes of the basic frequency domain units, the remaining basic frequency domain units to map the UCI.

Usually, UCI with a higher priority is more important. Therefore, the terminal may preferentially map UCI with a highest priority to the first basic frequency domain unit, for example, the terminal may map HARQ to the first basic frequency domain unit, and map remaining UCI to the remaining basic frequency domain unit, to improve transmission reliability.

In another example, the network device may send third indication information to the terminal, where the third indication information is used to indicate the second mapping order. Similar to the second indication information, the third indication information may also be carried in DCI and/or RRC signaling.

For example, the third indication information may be used to indicate an index order of the plurality of basic frequency domain units. This is relatively direct. For example, if the third indication information is used to indicate "1, 2", it indicates that the second mapping order is basic frequency domain unit 1 → basic frequency domain unit 2. That is, the terminal first selects the basic frequency domain unit 1 to perform UCI mapping, and then selects the basic frequency domain unit 2 to perform UCI mapping. For another example, if the third indication information is used to indicate "3, 2, 1", it indicates that the second mapping order is basic frequency domain unit 3 → basic frequency domain unit 2 → basic frequency domain unit 1. That is, the terminal sequentially selects the basic frequency domain unit 3, the basic frequency domain unit 2, and the basic frequency domain unit 1 to perform UCI mapping.

For another example, the third indication information may be used to indicate a manner in which the terminal selects the basic frequency domain units. For example, a manner in which the terminal selects the basic frequency domain units in ascending order of the indexes may be predefined as a first manner, and a manner in which the terminal selects the basic frequency domain units in descending order of the indexes may be predefined as a second manner. If the third indication information is used to indicate the first manner, the terminal selects the basic frequency domain units in ascending order of the indexes to perform UCI mapping. In this way, the third indication information carries a relatively small amount of content, so that resource overheads for sending the third indication information can be reduced.

For still another example, the third indication information may be used to indicate the first basic frequency domain unit. For example, the third indication information carries an index of the first basic frequency domain unit. In this case, it may be considered that the second mapping order is first basic frequency domain unit → remaining basic frequency domain unit.

The terminal maps the plurality of types of UCI to the plurality of basic frequency domain units in the idle resource based on the second indication information and/or the third indication information. It is assumed that the first mapping order is HARQ information and/or CG-UCI → CSI → UL-SCH, and the second mapping order is basic frequency domain unit 2 → basic frequency domain unit 1. In this case, when the terminal maps the plurality of types of UCI, starting from the first symbol behind a DMRS symbol in the scheduled resource, the terminal maps the HARQ information and/or the CG-UCI to a first resource in the basic frequency domain unit 2, where the HARQ information and/or the CG-UCI are/is mapped in the basic frequency domain unit 2 in an order of frequency domain first and then time domain.

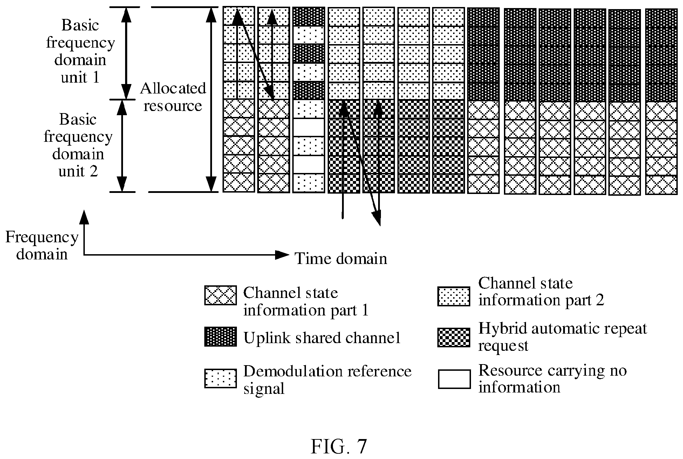

For ease of understanding, FIG. 7 is a schematic diagram of mapping a plurality of types of UCI to a scheduled resource according to an embodiment of this application. In FIG. 7, for example, a frequency domain resource corresponding to the scheduled resource belongs to two basic frequency domain units: a basic frequency domain unit 1 and a basic frequency domain unit 2. The UCI shown in FIG. 7 includes HARQ information, a UL-SCH, and CSI, where the CSI includes a CSI-part 1 and a CSI-part 2. A start time domain position corresponding to the HARQ is the first symbol behind a DMRS symbol, and a start time domain position corresponding to the CSI is the first OFDM symbol. The DMRS is dodged when the CSI-part 2 is mapped. The terminal may map the HARQ information, the UL-SCH, and the CSI to the two basic frequency domain units based on a first mapping order and a second mapping order. For example, in FIG. 7, the first mapping order is HARQ information → CSI-part 1 → CSI-part 2 → UL-SCH, and the second mapping order is basic frequency domain unit 2 → basic frequency domain unit 1. The terminal maps the UCI by using the basic frequency domain unit as a granularity, and a same type of UCI is mapped in one basic frequency domain unit. For example, the CSI-part 2 is mapped as shown by arrows in the basic frequency domain unit 1 in FIG. 7, and the HARQ information is mapped as shown by arrows in the basic frequency domain unit 2 in FIG. 7. It should be understood that a quantity of resources occupied by each type of UCI in each basic frequency domain unit is determined based on a quantity of bits of each type of UCI and/or a modulation order of an MCS.

When the terminal maps the plurality of types of UCI, starting from the first symbol behind the DMRS symbol in the scheduled resource, the terminal maps the HARQ information to the first resource in the basic frequency domain unit 2, where the HARQ information is mapped in the basic frequency domain unit 2 in an order of frequency domain first and then time domain, as shown by arrows in FIG. 7. A quantity of resources occupied by the first resource is determined based on a quantity of bits of the HARQ information, the modulation order, and/or the like. It should be noted that, if both the HARQ information and CG-UCI exist, the HARQ information and the CG-UCI may be mapped in the foregoing manner after being jointly encoded. Then, starting from the first symbol of the scheduled resource, the terminal maps the CSI-part 1 to a second resource in the basic frequency domain unit 2 in a manner of frequency domain first and then time domain. When the CSI-part 1 is mapped, the DMRS symbol is dodged, and if there is information occupied by other UCI with a higher priority, the information also needs to be dodged. For example, in FIG. 7, the first resource is separated by the second resource and the DMRS symbol. Similar to the first resource, a quantity of resources occupied by the second resource is determined based on a quantity of bits of the CSI-part 1, the modulation order, and/or the like. Then, starting from the first symbol of the scheduled resource, the terminal maps the CSI-part 2 to a third resource in the basic frequency domain unit 1 in a manner of frequency domain first and then time domain. When the CSI-part 2 is mapped, the DMRS symbol is dodged, and if there is a resource occupied by other UCI with a higher priority, the resource also needs to be dodged. For example, in FIG. 7, the third resource is separated by the DMRS symbol. Similar to the first resource, a quantity of resources occupied by the third resource is determined based on a quantity of bits of the CSI-part 2, the modulation order, and/or the like. Then, starting from the first symbol of the scheduled resource, the terminal maps the UL-SCH to a fourth resource in the basic frequency domain unit 1 in a manner of frequency domain first and then time domain. When the UL-SCH is mapped, for the DMRS signal, REs that are not occupied by the DMRS may be used. If there is a resource occupied by other UCI with a higher priority, the resource also needs to be dodged. Similar to the first resource, a quantity of resources occupied by the fourth resource is determined based on a quantity of bits of the UL-SCH, the modulation order, and/or the like.

As shown in FIG. 7, the terminal maps the UCI by using the basic frequency domain unit as a granularity, and a same type of UCI is mapped in a basic frequency domain unit. In this way, even if only a part of the scheduled resource is idle, because a same type of UCI is mapped in one basic frequency domain unit, it can be ensured that the sent UCI is not damaged. For example, in FIG. 7, it is assumed that the basic frequency domain unit 1 is occupied, and the basic frequency domain unit 2 is idle. The terminal may still complete mapping of the HARQ information and the CSI-part 2 to the basic frequency domain unit 2, and send the HARQ information and the CSI-part 2 on the basic frequency domain unit 2, thereby improving a sending opportunity of the HARQ information and the CSI-part 2.

In FIG. 7, the foregoing uses an example in which different UCI is mapped in a same basic frequency domain unit. For example, the HARQ information and the CSI-part 1 are mapped to the basic frequency domain unit 2, and the CSI-part 2 and the UL-SCH are mapped to the basic frequency domain unit 1. In a possible implementation, different uplink control information may be mapped to different basic frequency domain units. For example, there are four basic frequency domain units, and the four basic frequency domain units are a basic frequency domain unit 1, a basic frequency domain unit 2, a basic frequency domain unit 3, and a basic frequency domain unit 4. The HARQ information may be mapped to the basic frequency domain unit 1, the CSI-part 1 may be mapped to the basic frequency domain unit 2, the CSI-part 2 may be mapped to the basic frequency domain unit 3, and the UL-SCH may be mapped to the basic frequency domain unit 4.

To improve transmission reliability of the UCI, in this embodiment of this application, the UCI may be repeatedly mapped, that is, a same type of UCI is repeatedly mapped in a plurality of basic frequency domain units. That is, the terminal repeatedly sends a type of UCI, so that transmission reliability of the UCI is improved, and robustness can also be improved.

In a possible implementation, different types of UCI may be repeatedly mapped in a plurality of basic frequency domain units in a same manner or different manners. Different repeated mapping manners also correspond to different UCI mapping patterns. The terminal may determine a repeated mapping manner of the UCI based on importance or a priority of the UCI, or may determine a repeated mapping manner of the UCI based on an indication of the network device. This is not limited in this embodiment of this application.

In an example, a correspondence between a priority of UCI and a repeated mapping manner of the UCI may be predefined, as shown in Table 3. In Table 3, a smaller priority index indicates a higher priority.

**Table 3**

| Priority index | UCI | Repeated mapping manner |
|---|---|---|
| 1 | HARQ information and/or CG-UCI | Being repeatedly mapped in all basic frequency domain units |
| 2 | CSI part 1 | Being repeatedly mapped at a first interval in all the basic frequency domain units |
| 3 | CSI part 2 | Being not repeatedly mapped |
| 4 | UL-SCH | Being not repeatedly mapped |

As shown in Table 3, a priority of the HARQ information and/or a priority of the CG-UCI are/is higher, and therefore a repeated mapping manner of the HARQ information and/or a repeated mapping manner of the CG-UCI are/is that the HARQ information and/or the CG-UCI are/is repeatedly mapped in all the basic frequency domain units; a priority of the CSI part 1 is lower, and therefore a repeated mapping manner of the CSI part 1 is that the CSI part 1 is repeatedly mapped at equal intervals in all the basic frequency domain units; and a priority of the CSI part 2 and a priority of the UL-SCH are further lower, and therefore the CSI part 2 and the UL-SCH may not be repeatedly sent, that is, a repeated mapping manner of the CSI part 2 and a repeated mapping manner of the UL-SCH are that the CSI part 2 and the UL-SCH are not repeatedly mapped. In this embodiment of this application, UCI with a higher priority can be repeatedly mapped for a plurality of times, that is, the UCI with the higher priority can be sent for a plurality of times, so that transmission reliability can be improved; and UCI with a lower priority is repeatedly mapped for a smaller quantity of times, so that a resource waste can be avoided.

It should be noted that, in this embodiment of this application, a value of an interval in the manner in which repeated mapping is performed on all the basic frequency domain units at equal intervals is not limited. For example, the CSI part 1 may be repeatedly mapped in all the basic frequency domain units at an interval of one basic frequency domain unit, or the CSI part 1 may be repeatedly mapped in all the basic frequency domain units at an interval of two basic frequency domain units. In addition, equal-interval repeated mapping on all the basic frequency domain units may also be referred to as comb (comb) repeated mapping. For example, if a comb parameter is 2, it indicates that repeated mapping is performed on all the basic frequency domain units at an interval of one basic frequency domain unit.

In another example, the network device may send fourth indication information to the terminal, where the fourth indication information may be used to indicate a mapping pattern of the at least one type of UCI. For example, the fourth indication information may be used to indicate, for example, the content in Table 3. Alternatively, the content in Table 3 is predefined, and the fourth indication information may indicate a priority of each type of UCI. In a possible implementation, the fourth indication information may be carried in DCI and/or RRC signaling.

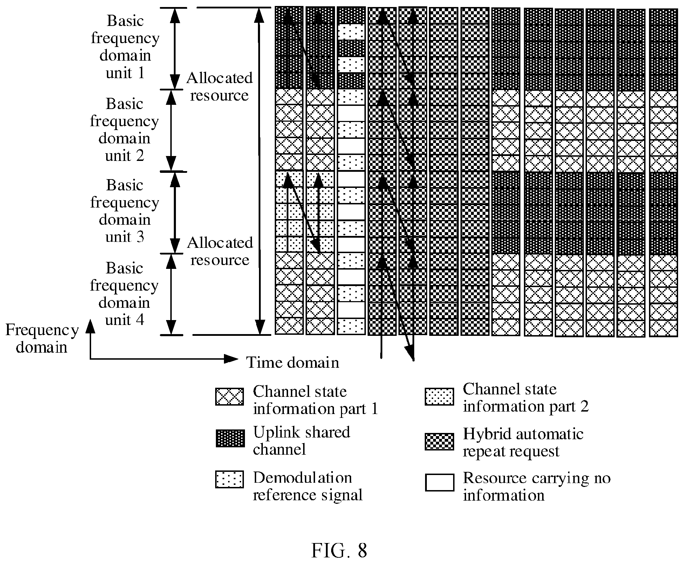

For ease of understanding, FIG. 8 is a schematic diagram of repeatedly mapping a plurality of types of UCI to a plurality of basic frequency domain units. In FIG. 8, for example, a frequency domain resource corresponding to a scheduled resource belongs to four basic frequency domain units, and the four basic frequency domain units are a basic frequency domain unit 1, a basic frequency domain unit 2, a basic frequency domain unit 3, and a basic frequency domain unit 4. As shown in FIG. 8, HARQ information is repeatedly mapped in all the basic frequency domain units, a CSI part 1 is repeatedly mapped in all the basic frequency domain units at an interval of one basic frequency domain unit, and the CSI part 2 information is not repeatedly mapped. If the terminal needs to send a UL-SCH, the UL-SCH may be repeatedly mapped, or may not be repeatedly mapped (this is used as an example in FIG. 8). If the UCI to be sent by the terminal further includes CG-UCI, the terminal may map the CG-UCI in a repeated mapping manner that is the same as or different from that of the HARQ information. If the CG-UCI is mapped in a repeated mapping manner different from that of the HARQ information, the fourth indication information may be further used to indicate a repeated mapping manner for the CG-UCI. For example, the fourth indication information may be used to indicate content in Table 4.

**Table 4**

| Priority | UCI | Repeated mapping manner |
|---|---|---|
| 1 | HARQ information | Being repeatedly mapped in all basic frequency domain units |
| 2 | CG-UCI | Being repeatedly mapped at a second interval in all the basic frequency domain units |
| 3 | CSI part 1 | Being repeatedly mapped at a first interval in all the basic frequency domain units |
| 4 | CSI part 2 | Being not repeatedly mapped |
| 5 | UL-SCH | Being not repeatedly mapped |

It should be noted that the foregoing embodiments may be coupled. For example, the network device separately sends one or more of the second indication information, the third indication information, and the fourth indication information to the terminal. The second indication information and the third indication information may be one piece of indication information, the third indication information and the fourth indication information may be one piece of indication information, or the second indication information, the third indication information, and the fourth indication information may be one piece of indication information.

For example, the second indication information, the third indication information, and the fourth indication information are one piece of indication information, and the indication information may be used to indicate content shown in Table 5.

**Table 5**

| UCI | Priority index | Index order of basic frequency domain units to which UCI is mapped | Repeated mapping manner |
|---|---|---|---|
| HARQ and/or CG-UCI | 1 | 1234 | Being repeatedly mapped in all basic frequency domain units |
| CSI part 1 | 2 | 24 | Being repeatedly mapped at a first interval in all the basic frequency domain units |
| CSI part 2 | 3 | 3 | Being not repeatedly mapped |
| UL-SCH | 4 | 1 | Being not repeatedly mapped |

The foregoing uses an example in which the resource allocated by the network device to the terminal is an unlicensed spectrum resource, and an example in which the resource allocated by the network device to the terminal is a PUSCH. It should be understood that, if a system supports carrier aggregation, each carrier corresponds to one serving cell (serving cell). The network device may configure a plurality of serving cells. The plurality of serving cells may be all cells deployed on an unlicensed band, may be all cells deployed on a licensed band, or may include a cell deployed on the unlicensed band and a cell deployed on the licensed band. If the resource allocated by the network device to the terminal includes a plurality of PUSCHs of a plurality of cells serving the terminal, that is, the network device can schedule the plurality of PUSCHs in the plurality of cells, the terminal may select one PUSCH from the plurality of PUSCHs, and map the UCI to the PUSCH according to the foregoing method.

In some embodiments, the terminal may select a PUSCH with highest reliability (a first PUSCH is used as an example below), to ensure reliable transmission of the UCI. That is, the terminal sends the at least one type of UCI on a part of the allocated resource, and the part of the resource corresponds to the first PUSCH. It should be noted that high/low reliability herein is relative. For example, reliability of the licensed band is higher than reliability of the unlicensed band. The terminal may select a PUSCH from a cell with highest reliability, that is, the first PUSCH is selected from the cell with the highest reliability (a first cell is used as an example below). That is, the terminal may preferentially select the first PUSCH from a plurality of PUSCHs of the first cell to map the UCI.

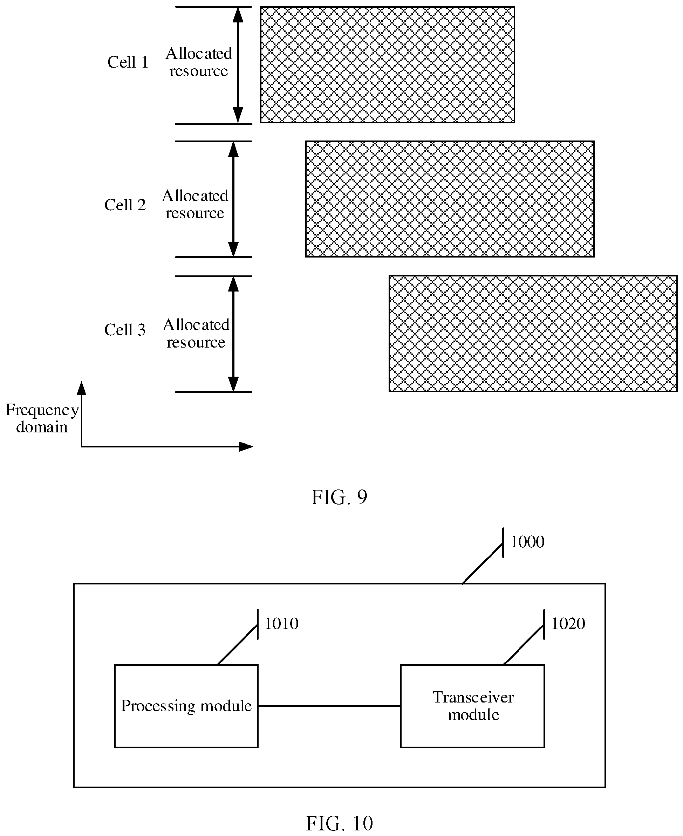

In other words, when carriers corresponding to the plurality of serving cells of the terminal are partially located on the unlicensed band and are partially located on the licensed band, the terminal may determine that the first cell is a cell corresponding to a carrier deployed on the licensed band, that is, the terminal may choose to map the UCI to the first cell. As shown in FIG. 9, it is assumed that the network device configures three cells for the terminal, and the three cells are a cell 1, a cell 2, and a cell 3. The cell 1 is deployed on a licensed band, and the cell 2 and the cell 3 are deployed on an unlicensed band. The network device separately schedules, in the three cells for the terminal, PUSCHs that partially overlap in time domain. For example, the cell 1 corresponds to a PUSCH 1, the cell 2 corresponds to a PUSCH 2, and a cell 3 corresponds to a PUSCH 3. The PUSCH 1, the PUSCH 2, and the PUSCH 3 partially overlap/completely overlap in time domain. When performing UCI mapping, the terminal may select, from the three PUSCHs, a PUSCH, namely, the PUSCH 1, in a cell, namely, the cell 1, deployed on the licensed band.

Further, if cells corresponding to carriers located on the licensed band include a plurality of cells, the terminal may select one cell from the plurality of cells as the first cell. For example, the terminal may select a cell with a largest or smallest cell index as the first cell.

If the plurality of serving cells may be all cells deployed on the unlicensed band, the terminal may select a cell with a largest or smallest cell index as the first cell.

In some other embodiments, the network device may specify a cell for the terminal, and the terminal selects a PUSCH of the cell to map the UCI. For example, the network device sends fifth indication information to the terminal. The fifth indication information may be used to indicate the first cell. For example, the fifth indication information includes an index of the first cell. The terminal receives the fifth indication information, and determines to map the UCI to the PUSCH of the cell indicated by the fifth indication information. A specific implementation of the fifth indication information is not limited in this embodiment of this application. For example, the fifth indication information may be carried in DCI and/or RRC signaling.

In this embodiment of this application, the UCI is mapped by using the basic frequency domain unit as a granularity, and a same type of UCI is mapped in a basic frequency domain unit. In this way, even if only a part of the scheduled resource is idle, because a same type of UCI is mapped in one basic frequency domain unit, it can be ensured that the sent UCI is not damaged.

The foregoing embodiments provided in this application separately describe the method provided in the embodiments of this application from a perspective of interaction between the terminal device and the network device. To implement the functions in the foregoing method provided in the embodiments of this application, the terminal device and the network device each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus for implementing the foregoing method in the embodiments of this application. Therefore, all the foregoing content can be used in the following embodiments. Repeated content is not described again.

FIG. 10 is a schematic block diagram of a communication apparatus 1000 according to an embodiment of this application. The communication apparatus 1000 may correspondingly implement functions or steps implemented by the terminal or the network device in the foregoing method embodiments. The communication apparatus may include a processing module 1010 and a transceiver module 1020. Optionally, the communication apparatus may further include a storage unit. The storage unit may be configured to store instructions (code or a program) and/or data. The processing module 1010 and the transceiver module 1020 may be coupled to the storage unit. For example, the processing module 1010 may read the instructions (code or a program) and/or data in the storage unit, to implement a corresponding method. The foregoing units may be independently disposed, or may be partially or completely integrated.

In some possible implementations, the communication apparatus 1000 can correspondingly implement the behavior and functions of the terminal in the foregoing method embodiments. For example, the communication apparatus 1000 may be the terminal, or may be a component (for example, a chip or a circuit) applied to the terminal. The transceiver module 1020 may be configured to perform all receiving or sending operations performed by the terminal in the embodiment shown in FIG. 6, for example, S601 and S602 in the embodiment shown in FIG. 6, and/or configured to support another process of the technology described in this specification. The processing module 1010 is configured to perform all operations, except the sending and receiving operations, performed by the terminal device in the embodiment shown in FIG. 6, for example, determine the idle resource in the allocated resource, and/or configured to support another process of the technology described in this specification.

In some embodiments, the transceiver module 1020 is configured to receive first indication information from a network device, where the first indication information is used to indicate a resource allocated by the network device to the terminal, and the allocated resource belongs to at least two basic frequency domain units and is used by the terminal to perform uplink transmission. The processing module 1010 is configured to map at least one type of UCI to the allocated resource based on the basic frequency domain unit. The transceiver module 1020 is further configured to send the at least one type of UCI to the network device on the allocated resource.

In an optional implementation, the processing module 1010 is further configured to perform LBT based on the basic frequency domain unit, to determine an idle resource in the allocated resource; and the transceiver module 1020 is specifically configured to send the at least one type of UCI on the idle resource.

In an optional implementation, the at least one type of UCI includes at least two types of UCI, and the at least two types of UCI are mapped to the idle resource based on priorities of the at least two types of UCI; and the at least two types of UCI include a HARQ and CSI, and a priority of the HARQ is higher than a priority of the CSI.

In an optional implementation, the transceiver module 1020 is further configured to receive second indication information from the network device, where the second indication information is used to indicate the priorities of the at least two types of UCI.

In an optional implementation, the at least one type of UCI is mapped to the at least two basic frequency domain units based on priorities of the basic frequency domain units.

In an optional implementation, a value of an index of the basic frequency domain unit is in direct proportion to a priority of the basic frequency domain unit; or a value of an index of the basic frequency domain unit is in inverse proportion to a priority of the basic frequency domain unit.

In an optional implementation, the priority of the basic frequency domain unit is predefined or is carried in third indication information sent by the network device.

In an optional implementation, the at least two basic frequency domain units include a first basic frequency domain unit, and the first basic frequency domain unit is a frequency domain unit listened by the terminal in one time unit or a basic frequency domain unit whose idle probability is greater than a preset threshold; and the transceiver module 1020 is further configured to receive third indication information from the network device, where the third indication information includes a first index of the first basic frequency domain unit.

In an optional implementation, a same type of UCI is repeatedly mapped in a plurality of basic frequency domain units.

In an optional implementation, the transceiver module 1020 is further configured to receive fourth indication information from the network device, where the fourth indication information is used to indicate a mapping pattern of the at least one type of UCI in the plurality of basic frequency domain units.

In an optional implementation, the at least one type of UCI includes a HARQ, and the HARQ is repeatedly mapped in all idle basic frequency domain units; and
the at least one type of UCI includes CSI, and the CSI is repeatedly mapped at a first interval in all the idle basic frequency domain units.

In an optional implementation, the CSI includes a CSI part 1 and a CSI part 2, the CSI part 1 is repeatedly mapped at the first interval in all the idle basic frequency domain units, and the CSI part 2 is mapped once in all the idle basic frequency domain units.

In an optional implementation, the at least two basic frequency domain units include a first basic frequency domain unit, the first basic frequency domain unit is a frequency domain unit listened by the terminal in one time unit or a basic frequency domain unit whose idle probability is greater than a preset threshold, the at least one type of UCI includes a HARQ, and the HARQ is mapped to the first basic frequency domain unit.

In an optional implementation, the processing module 1010 is specifically configured to send the at least one type of UCI to the network device on a part of the allocated resource, where the part of the resource corresponds to a first PUSCH in a plurality of candidate PUSCHs, the first PUSCH is a PUSCH of a first cell of a plurality of serving cells of the terminal, the plurality of serving cells include a cell deployed on a licensed band and a cell deployed on an unlicensed band, and the first cell is a cell deployed on the licensed band.

In an optional implementation, the processing module 1010 is specifically configured to send the at least one type of UCI to the network device on a part of the allocated resource, where the part of the resource corresponds to a first PUCCH in a plurality of candidate PUCCHs, the first PUCCH is a PUCCH of a first cell of a plurality of serving cells of the terminal, the plurality of serving cells include a cell deployed on a licensed band and a cell deployed on an unlicensed band, and the first cell is a cell deployed on the licensed band.

In an optional implementation, the transceiver module 1020 is further configured to receive fifth indication information from the network device, where the fifth indication information is used to indicate a second cell; and the processing module 1010 is specifically configured to map the at least one type of UCI to a part of the allocated resource based on the basic frequency domain unit, where the part of the resource belongs to a resource of the second cell.

It should be understood that in this embodiment of this application, the processing module 1010 may be implemented by a processor or a processor-related circuit component, and the transceiver module 1020 may be implemented by a transceiver, a transceiver-related circuit component, or a communication interface.

In some possible implementations, the communication apparatus 1000 can correspondingly implement the behavior and functions of the network device in the foregoing method embodiments. For example, the communication apparatus 1000 may be the network device, or may be a component (for example, a chip or a circuit) applied to the network device. The transceiver module 1020 may be configured to perform all receiving or sending operations performed by the network device in the embodiment shown in FIG. 6, for example, S601 and S602 in the embodiment shown in FIG. 6, and/or configured to support another process of the technology described in this specification. The processing module 1010 is configured to perform all operations, except the sending and receiving operations, performed by the network device in the embodiment shown in FIG. 6, for example, generate the first indication information, and/or configured to support another process of the technology described in this specification.

In some embodiments, the transceiver module 1020 is configured to send first indication information determined by the processing module 1010 to a terminal, where the first indication information is used to indicate a resource allocated by the network device to the terminal, and the allocated resource belongs to at least two basic frequency domain units and is used by the terminal to perform uplink transmission. The transceiver module 1020 is further configured to receive at least one type of UCI from the terminal on the allocated resource, where the at least one type of UCI is mapped to the allocated resource based on the basic frequency domain unit.

In an optional implementation, the at least one type of UCI includes at least two types of UCI, and the at least two types of UCI are mapped to an idle resource based on priorities of the at least two types of UCI; and the at least two types of UCI include a HARQ and CSI, and a priority of the HARQ is higher than a priority of the CSI.

In an optional implementation, the transceiver module 1020 is further configured to send second indication information to the terminal, where the second indication information is used to indicate the priorities of the at least two types of UCI.

In an optional implementation, the at least one type of UCI is mapped to the at least two basic frequency domain units based on priorities of the basic frequency domain units.

In an optional implementation, a value of an index of the basic frequency domain unit is in direct proportion to a priority of the basic frequency domain unit; or a value of an index of the basic frequency domain unit is in inverse proportion to a priority of the basic frequency domain unit.

In an optional implementation, the priority of the basic frequency domain unit is predefined or is carried in third indication information sent by the network device.

In an optional implementation, the at least two basic frequency domain units include a first basic frequency domain unit, and the first basic frequency domain unit is a frequency domain unit listened by the terminal in one time unit or a basic frequency domain unit whose idle probability is greater than a preset threshold; and the transceiver module 1020 is further configured to send third indication information to the terminal, where the third indication information includes a first index of the first basic frequency domain unit.

In an optional implementation, a same type of UCI is repeatedly mapped in a plurality of basic frequency domain units.

In an optional implementation, the transceiver module 1020 is further configured to send fourth indication information to the terminal, where the fourth indication information is used to indicate a mapping pattern of the at least one type of UCI in the plurality of basic frequency domain units.

In an optional implementation, the at least one type of UCI includes a HARQ, and the HARQ is repeatedly mapped in all idle basic frequency domain units; and
the at least one type of UCI includes CSI, and the CSI is repeatedly mapped at a first interval in all the idle basic frequency domain units.

In an optional implementation, the CSI includes a CSI part 1 and a CSI part 2, the CSI part 1 is repeatedly mapped at the first interval in all the idle basic frequency domain units, and the CSI part 2 is mapped once in all the idle basic frequency domain units.

In an optional implementation, the at least two basic frequency domain units include a first basic frequency domain unit, the first basic frequency domain unit is a frequency domain unit listened by the terminal in one time unit or a basic frequency domain unit whose idle probability is greater than a preset threshold, the at least one type of UCI includes a HARQ, and the HARQ is mapped to the first basic frequency domain unit.

In an optional implementation, the transceiver module 1020 is further configured to send fifth indication information to the terminal, where the fifth indication information is used to indicate a second cell and is used to indicate the terminal to map the at least one type of UCI to a resource that belongs to the second cell.

It should be understood that in this embodiment of this application, the processing module 1010 may be implemented by a processor or a processor-related circuit component, and the transceiver module 1020 may be implemented by a transceiver, a transceiver-related circuit component, or a communication interface.

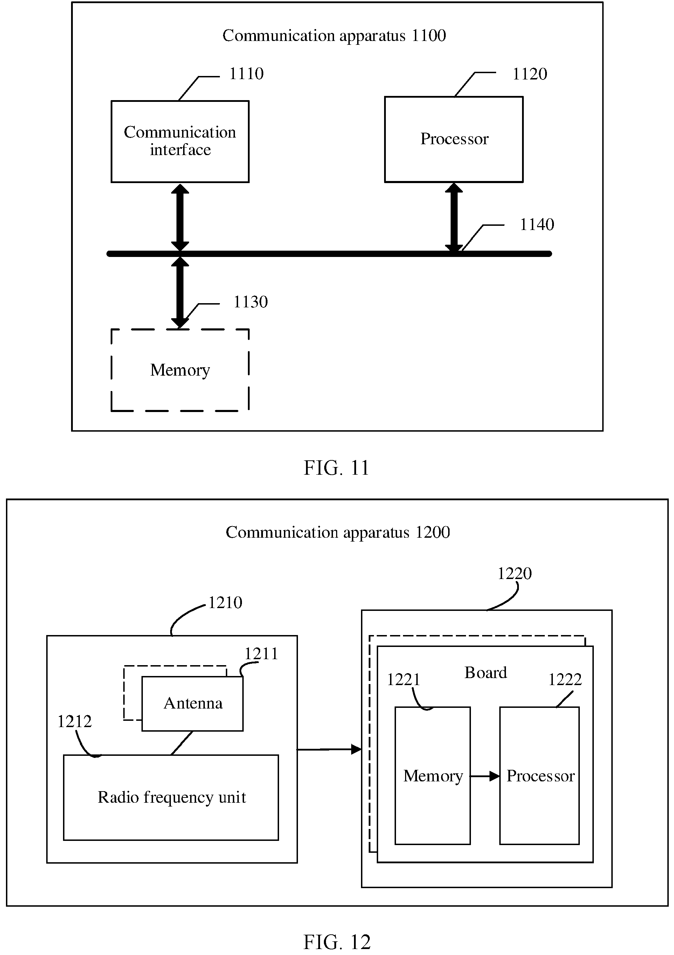

FIG. 11 shows a communication apparatus 1100 according to an embodiment of this application. The communication apparatus 1100 may be a terminal, and can implement the functions of the terminal in the method provided in the embodiments of this application. Alternatively, the communication apparatus 1100 may be a network device, and can implement the functions of the network device in the method provided in the embodiments of this application. Alternatively, the communication apparatus 1100 may be an apparatus that can support the terminal in implementing the corresponding functions in the method provided in the embodiments of this application, or an apparatus that can support the network device in implementing the corresponding functions in the method provided in the embodiments of this application. The communication apparatus 1100 may be a chip system. In this embodiment of this application, the chip system may include a chip, or may include a chip and another discrete device.

In terms of hardware implementation, the foregoing transceiver module 1020 may be a transceiver, and the transceiver is integrated into the communication apparatus 1100 to form a communication interface 1110.

The communication apparatus 1100 includes at least one processor 1120, configured to implement or support the communication apparatus 1100 in implementing the functions of the network device or the terminal device in the method provided in the embodiments of this application. For details, refer to the detailed descriptions in the method example. Details are not described herein again.

The communication apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules, may be in an electrical form, a mechanical form, or another form, and is used for information exchange between the apparatuses, the units, or the modules. The processor 1120 may operate in cooperation with the memory 1130. The processor 1120 may execute the program instructions and/or data stored in the memory 1130, to enable the communication apparatus 1100 to implement a corresponding method. At least one of the at least one memory may be included in the processor. It should be noted that the memory 1130 is not mandatory, and therefore is shown by using a dashed line in FIG. 11.

The communication apparatus 1100 may further include the communication interface 1110, configured to communicate with another device by using a transmission medium, so that the communication interface 1110 can be used by an apparatus in the communication apparatus 1100 to communicate with the another device. For example, when the communication apparatus is a terminal device, the another device is a network device; or when the communication apparatus is a network device, the another device is a terminal device. The processor 1120 may send/receive data by using the communication interface 1110. The communication interface 1110 may be specifically a transceiver.

A specific connection medium between the communication interface 1110, the processor 1120, and the memory 1130 is not limited in this embodiment of this application. In this embodiment of this application, the memory 1130, the processor 1120, and the communication interface 1110 are connected to each other by using a bus 1140 in FIG. 11. The bus is represented by using a thick line in FIG. 11. This is merely an example for description, and is not used as a limitation. Another component connection manner may be alternatively used. The bus may be classified as an address bus, a data bus, a control bus, or the like. For ease of representation, only one bold line is used to represent the bus in FIG. 11, but this does not mean that there is only one bus or only one type of bus.

In this embodiment of this application, the processor 1120 may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by a combination of hardware in the processor and a software module.

In this embodiment of this application, the memory 1130 may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in this embodiment of this application may be alternatively a circuit or any other apparatus that can implement a storage function, and is configured to store the program instructions and/or data.

It should be noted that the communication apparatus in the foregoing embodiment may be a terminal device, may be a circuit, or may be a chip applied to the terminal device, or another combined device, component, or the like that has the functions of the terminal device. When the communication apparatus is a terminal device, the transceiver module may be a transceiver and may include an antenna, a radio frequency circuit, and the like, and the processing module may be a processor, for example, a central processing unit (central processing unit, CPU). When the communication apparatus is a component that has the functions of the terminal device, the transceiver module may be a radio frequency unit, and the processing module may be a processor. When the communication apparatus is a chip system, the transceiver module may be an input/output interface of the chip system, and the processing module may be a processor of the chip system.

FIG. 12 is a schematic diagram of a simplified structure of a communication apparatus. For ease of understanding and illustration, in FIG. 12, for example, the communication apparatus is a base station. The base station may be applied to the system shown in FIG. 5, and may be the network device in FIG. 5 and perform the functions of the network device in the foregoing method embodiments.

The communication apparatus 1200 may include a transceiver 1210, a memory 1221, and a processor 1222. The transceiver 1210 may be used by the communication apparatus to perform communication, for example, configured to send the foregoing first indication information, second indication information, and the like. The memory 1221 is coupled to the processor 1222, and may be configured to store a program and data that are necessary for implementing functions by the communication apparatus 1200. The processor 1222 is configured to support the communication apparatus 1200 in performing the corresponding functions in the foregoing method. The functions may be implemented by invoking the program stored in the memory 1221.

Specifically, the transceiver 1210 may be a wireless transceiver, and may be configured to support the communication apparatus 1200 in receiving and sending signaling and/or data by using a wireless air interface. The transceiver 1210 may also be referred to as a transceiver unit or a communication unit. The transceiver 1210 may include one or more radio frequency units 1212 and one or more antennas 1211. The radio frequency unit, for example, a remote radio unit (remote radio unit, RRU) or an active antenna unit (active antenna unit, AAU), may be specifically configured to: transmit a radio frequency signal, and perform conversion between a radio frequency signal and a baseband signal. The one or more antennas may be specifically configured to radiate and receive a radio frequency signal. Optionally, the transceiver 1210 may include only the foregoing radio frequency units. In this case, the communication apparatus 1200 may include the transceiver 1210, the memory 1221, the processor 1222, and the antenna 1211.

The memory 1221 and the processor 1222 may be integrated together or may be independent of each other. As shown in FIG. 12, the memory 1221 and the processor 1222 may be integrated into a control unit 1220 of the communication apparatus 1200. For example, the control unit 1220 may include a baseband unit (baseband unit, BBU) of an LTE base station, and the baseband unit may also be referred to as a digital unit (digital unit, DU); or the control unit 1210 may include a distributed unit (distributed unit, DU) and/or a centralized unit (centralized unit, CU) in a base station in 5G or a future radio access technology. The control unit 1220 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 1221 and the processor 1222 may serve one or more antenna panels. That is, the memory 1221 and the processor 1222 may be separately disposed on each antenna panel, or a plurality of antenna panels may share a same memory 1221 and a same processor 1222. In addition, a necessary circuit may be disposed on each antenna panel. For example, the circuit may be configured to implement coupling between the memory 1221 and the processor 1222. The transceiver 1210, the processor 1222, and the memory 21 may be connected to each other by using a bus (bus) structure and/or another connection medium.

Based on the structure shown in FIG. 12, when the communication apparatus 1200 needs to send data, the processor 1222 may perform baseband processing on the to-be-sent data, and then output a baseband signal to the radio frequency unit. After performing radio frequency processing on the baseband signal, the radio frequency unit sends a radio frequency signal in a form of an electromagnetic wave by using the antenna. When data is sent to the communication apparatus 1200, the radio frequency unit receives a radio frequency signal by using the antenna, converts the radio frequency signal into a baseband signal, and outputs the baseband signal to the processor 1222. The processor 1222 converts the baseband signal into data, and processes the data.

Based on the structure shown in FIG. 12, the transceiver 1210 may be configured to perform the foregoing steps performed by the transceiver module 1020; and/or the processor 1222 may be configured to invoke instructions in the memory 1221 to perform the foregoing steps performed by the processing module 1010.

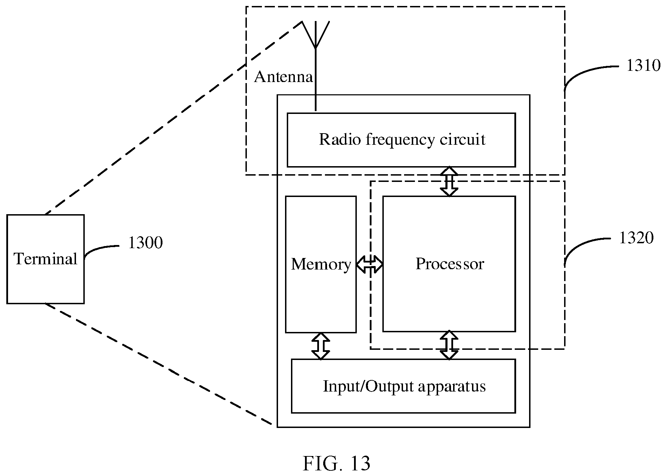

FIG. 13 is a schematic diagram of a simplified structure of a terminal. For ease of understanding and illustration, in FIG. 13, for example, the terminal 1300 is a mobile phone. As shown in FIG. 13, the terminal includes a processor, a memory, a radio frequency circuit, an antenna, and an input/output apparatus. The processor is mainly configured to: for example, process a communication protocol and communication data, control the on-board unit, execute a software program, and process data of the software program. The memory is mainly configured to store a software program and data. The radio frequency circuit is mainly configured to: perform conversion between a baseband signal and a radio frequency signal, and process a radio frequency signal. The antenna is mainly configured to send/receive a radio frequency signal in a form of an electromagnetic wave. The input/output apparatus such as a touchscreen, a display, or a keyboard is mainly configured to receive data input by a user and data output to the user. It should be noted that some types of devices may have no input/output apparatus.

When data needs to be sent, after performing baseband processing on the to-be-sent data, the processor outputs a baseband signal to the radio frequency circuit. After performing radio frequency processing on the baseband signal, the radio frequency circuit sends a radio frequency signal in a form of an electromagnetic wave by using the antenna. When data is sent to the device, the radio frequency circuit receives a radio frequency signal by using the antenna, converts the radio frequency signal into a baseband signal, and outputs the baseband signal to the processor. The processor converts the baseband signal into data, and processes the data. For ease of description, only one memory and one processor are shown in FIG. 13. In an actual device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have sending and receiving functions may be considered as a transceiver unit of the apparatus, and the processor having a processing function may be considered as a processing unit of the apparatus. As shown in FIG. 13, the apparatus includes a transceiver unit 1310 and a processing unit 1320. The transceiver unit 1310 may also be referred to as a transceiver, a transceiver apparatus, or the like. The processing unit 1320 may also be referred to as a processor, a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. The transceiver unit 1310 sometimes may also be referred to as a transceiver, a transceiver circuit, or the like. The receiving unit sometimes may also be referred to as a receiver, a receive circuit, or the like. The sending unit sometimes may also be referred to as a transmitter, a transmit circuit, or the like.

It should be understood that the transceiver unit 1310 is configured to perform the sending operation and the receiving operation of the terminal in the foregoing method embodiments, and the processing unit 1320 is configured to perform an operation other than the sending operation or the receiving operation of the terminal in the foregoing method embodiments. For example, in an implementation, the transceiver unit 1310 may be configured to perform S601 and S602 in the embodiment shown in FIG. 6, and/or configured to support another process of the technology described in this specification.

When the communication apparatus is a chip apparatus or a circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include more network devices and more terminals. For example, the communication system includes a network device and a terminal that are configured to implement the related functions in FIG. 7.

The network device is separately configured to implement the foregoing functions related to a network part in FIG. 6. The terminal is configured to implement the foregoing functions related to the terminal device in FIG. 6. For details, refer to the related descriptions in the foregoing method embodiment. Details are not described herein again.

An embodiment of this application further provides a computer-readable storage medium, including instructions. When the instructions are run on a computer, the computer is enabled to perform the method performed by the network device in FIG. 6. Alternatively, when the instructions are run on a computer, the computer is enabled to perform the method performed by the terminal in FIG. 6.

An embodiment of this application further provides a computer program product, including instructions. When the instructions are run on a computer, the computer is enabled to perform the method performed by the network device in FIG. 6. Alternatively, when the instructions are run on a computer, the computer is enabled to perform the method performed by the terminal in FIG. 6.

An embodiment of this application provides a chip system. The chip system includes a processor and may further include a memory, to implement the functions of the network device or the terminal in the foregoing method, or implement the functions of the network device and the terminal in the foregoing method. The chip system may include a chip, or may include a chip and another discrete device. It should be understood that, in various embodiments of this application, sequence numbers of the foregoing processes do not mean execution orders. The execution orders of the processes should be determined based on functions and internal logic of the processes, and should not be construed as any limitation on the implementation processes of the embodiments of this application.

In the embodiments of this application, "a plurality of" means two or more. In view of this, in the embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between associated objects. The terms "system" and "network" may be interchangeably used in the embodiments of this application.

Unless otherwise specified, ordinal numbers such as "first" and "second" in the embodiments of this application are used to distinguish between a plurality of objects, and are not intended to limit an order, a time order, priorities, or importance of the plurality of objects.

A person of ordinary skill in the art may be aware that various illustrative logical blocks (illustrative logical block) and steps (step) described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, reference can be made to the corresponding processes in the foregoing method embodiments. Details are not described herein again.

In the several embodiments provided in this application, it should be understood that the disclosed system, apparatus, and method may be implemented in other manners. For example, the apparatus embodiments described above are merely examples. For example, unit division is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, the functional units in the embodiments of this application may be integrated into one processing unit, each of the units may physically exist alone, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The scope of protection of the invention is limited by the appended claims.

## Claims

1. An uplink control information sending method, wherein the method is applied to a first apparatus at a terminal side and the method comprises:
receiving (S601) first indication information from a second apparatus at a network side, wherein the first indication information is used to indicate a resource allocated by the second apparatus to the first apparatus, and the allocated resource belongs to at least two basic frequency domain units and is used by the first apparatus to perform uplink transmission; and
sending (S602) at least one type of uplink control information to the second apparatus on the allocated resource, wherein the at least one type of uplink control information is mapped to the allocated resource based on the basic frequency domain unit,
wherein the at least one type of uplink control information is mapped to the at least two basic frequency domain units based on priorities of the basic frequency domain units.

2. The method according to claim 1, wherein the sending at least one type of uplink control information to the second apparatus on the allocated resource comprises:
performing listen before talk, LBT, based on the basic frequency domain unit, to determine an idle resource in the allocated resource; and
sending the at least one type of uplink control information on the idle resource.

3. The method according to claim 2, wherein the at least one type of uplink control information comprises at least two types of uplink control information, and the at least two types of uplink control information are mapped to the idle resource based on priorities of the at least two types of uplink control information; and
the at least two types of uplink control information comprise a hybrid automatic repeat request, HARQ, and channel state information, CSI, and a priority of the HARQ is higher than a priority of the CSI.

4. The method according to claim 2, wherein the method further comprises:
receiving second indication information from the second apparatus, wherein the second indication information is used to indicate the priorities of the at least two types of uplink control information.

5. The method according to any of claims 1-4, wherein a value of an index of the basic frequency domain unit is in direct proportion to a priority of the basic frequency domain unit; or a value of an index of the basic frequency domain unit is in inverse proportion to a priority of the basic frequency domain unit.

6. The method according to any of claims 1-5, wherein the priority of the basic frequency domain unit is predefined or is carried in third indication information sent by the second apparatus.

7. An uplink control information receiving method, where the method is applied to a second apparatus at a network side and the method comprises:
sending (S601) first indication information to a first apparatus at a terminal side, wherein the first indication information is used to indicate a resource allocated by the second apparatus to the first apparatus, and the allocated resource belongs to at least two basic frequency domain units and is used by the first apparatus to perform uplink transmission; and
receiving (S602) at least one type of uplink control information from the first apparatus on the allocated resource, wherein the at least one type of uplink control information is mapped to the allocated resource based on the basic frequency domain unit,
wherein the at least one type of uplink control information is mapped to the at least two basic frequency domain units based on priorities of the basic frequency domain units.

8. The method according to claim 7, wherein the at least one type of uplink control information comprises at least two types of uplink control information, and the at least two types of uplink control information are mapped to an idle resource based on priorities of the at least two types of uplink control information; and
the at least two types of uplink control information comprise a hybrid automatic repeat request, HARQ, and channel state information, CSI, and a priority of the HARQ is higher than a priority of the CSI.

9. The method according to claim 8, wherein the method further comprises:
sending second indication information to the first apparatus, wherein the second indication information is used to indicate the priorities of the at least two types of uplink control information.

10. The method according to any one of claims 7-9, wherein a value of an index of the basic frequency domain unit is in direct proportion to a priority of the basic frequency domain unit; or a value of an index of the basic frequency domain unit is in inverse proportion to a priority of the basic frequency domain unit.

11. The method according to any one of claims 7-10, wherein the priority of the basic frequency domain unit is predefined or is carried in third indication information sent by the second apparatus.

12. The method according to any one of claims 7-9, wherein the at least two basic frequency domain units comprise a first basic frequency domain unit, and the first basic frequency domain unit is a frequency domain unit listened by the first apparatus in one time unit or a basic frequency domain unit whose idle probability is greater than a preset threshold; and the method further comprises:
sending third indication information to the first apparatus, wherein the third indication information comprises a first index of the first basic frequency domain unit.

13. A communication apparatus, wherein the communication apparatus comprises a module to perform the method according to any one of claims 1 to 6 or 7 to 12.

14. A computer-readable storage medium storing a computer program, wherein when the computer program is run, the method according to any one of claims 1 to 6 or 7 to 12 is implemented.

15. A computer program product including computer program code, wherein when the computer program code is run, the method according to any one of claims 1 to 6 or 7 to 12 is performed.

## Patentansprüche

1. Verfahren zum Senden von Uplink-Steuerinformationen, wobei das Verfahren auf eine erste Einrichtung auf einer Endgeräteseite angewendet wird und das Verfahren umfasst:
Empfangen (S601) von ersten Anzeigeinformationen von einer zweiten Vorrichtung auf einer Netzwerkseite kommend, wobei die ersten Anzeigeinformationen verwendet werden, um eine Ressource anzuzeigen, die der ersten Einrichtung durch die zweite Einrichtung zugewiesen wird, und die zugewiesene Ressource zu mindestens zwei grundlegenden Frequenzbereichseinheiten gehört und von der ersten Einrichtung verwendet wird, um eine Uplink-Übertragung durchzuführen; und
Senden (S602) mindestens einer Art von Uplink-Steuerinformationen an die zweite Einrichtung auf der zugewiesenen Ressource, wobei die mindestens eine Art von Uplink-Steuerinformationen basierend auf der grundlegenden Frequenzbereichseinheit auf die zugewiesene Ressource abgebildet wird,
wobei die mindestens eine Art von Uplink-Steuerinformationen basierend auf Prioritäten der grundlegenden Frequenzbereichseinheiten auf die mindestens zwei grundlegenden Frequenzbereichseinheiten abgebildet wird.

2. Verfahren nach Patentanspruch 1, wobei das Senden mindestens einer Art von Uplink-Steuerinformationen an die zweite Einrichtung auf der zugewiesenen Ressource umfasst:
Durchführen von Listen-Before-Talk, LBT, basierend auf der grundlegenden Frequenzbereichseinheit, um eine freie Ressource in der zugewiesenen Ressource festzustellen; und
Senden der mindestens einen Art von Uplink-Steuerinformationen auf der freie Ressource.

3. Verfahren nach Patentanspruch 2, wobei die mindestens eine Art von Uplink-Steuerinformationen mindestens zwei Arten von Uplink-Steuerinformationen umfasst, und die mindestens zwei Arten von Uplink-Steuerinformationen auf die freie Ressource basierend auf Prioritäten der mindestens zwei Arten von Uplink-Steuerinformationen abgebildet werden; und
die mindestens zwei Arten von Uplink-Steuerinformationen eine hybride automatische Wiederholungsanforderung, HARQ, und Kanalzustandsinformationen, CSI, umfassen und eine Priorität der HARQ ist höher als eine Priorität der CSI.

4. Verfahren nach Patentanspruch 2, wobei das Verfahren ferner umfasst:
Empfangen von zweiten Anzeigeinformationen von der zweiten Einrichtung kommend, wobei die zweiten Anzeigeinformationen verwendet werden, um die Prioritäten der mindestens zwei Arten von Uplink-Steuerinformationen anzuzeigen.

5. Verfahren nach einem der Patentansprüche 1 bis 4, wobei ein Wert eines Index der grundlegenden Frequenzbereichseinheit direkt proportional zu einer Priorität der grundlegenden Frequenzbereichseinheit ist; oder ein Wert eines Index der grundlegenden Frequenzbereichseinheit umgekehrt proportional zu einer Priorität der grundlegenden Frequenzbereichseinheit ist.

6. Verfahren nach einem der Patentansprüche 1 bis 5, wobei die Priorität der grundlegenden Frequenzbereichseinheit vordefiniert ist oder in von der zweiten Einrichtung gesendeten dritten Anzeigeinformationen enthalten ist.

7. Verfahren zum Empfangen von Uplink-Steuerinformationen, wobei das Verfahren auf eine zweite Einrichtung auf einer Netzwerkseite angewendet wird und das Verfahren umfasst:
Senden (S601) erster Anzeigeinformationen an eine erste Einrichtung auf einer Endgeräteseite, wobei die ersten Anzeigeinformationen verwendet werden, um eine Ressource anzuzeigen, die der ersten Einrichtung durch die zweite Einrichtung zugewiesen wird, und die zugewiesene Ressource zu mindestens zwei grundlegenden Frequenzbereichseinheiten gehört und von der ersten Einrichtung verwendet wird, um eine Uplink-Übertragung durchzuführen; und
Empfangen (S602) mindestens einer Art von Uplink-Steuerinformationen von der ersten Einrichtung auf der zugewiesenen Ressource kommend, wobei die mindestens eine Art von Uplink-Steuerinformationen basierend auf der grundlegenden Frequenzbereichseinheit auf die zugewiesene Ressource abgebildet wird,
wobei die mindestens eine Art von Uplink-Steuerinformationen basierend auf Prioritäten der grundlegenden Frequenzbereichseinheiten auf die mindestens zwei grundlegenden Frequenzbereichseinheiten abgebildet wird.

8. Verfahren nach Patentanspruch 7, wobei die mindestens eine Art von Uplink-Steuerinformationen mindestens zwei Arten von Uplink-Steuerinformationen umfasst, und die mindestens zwei Arten von Uplink-Steuerinformationen basierend auf Prioritäten der mindestens zwei Arten von Uplink-Steuerinformationen auf eine freie Ressource abgebildet werden; und
die mindestens zwei Arten von Uplink-Steuerinformationen eine hybride automatische Wiederholungsanforderung, HARQ, und Kanalzustandsinformationen, CSI, umfassen und eine Priorität der HARQ ist höher als eine Priorität der CSI.

9. Verfahren nach Patentanspruch 8, wobei das Verfahren ferner umfasst:
Senden zweiter Anzeigeinformationen an die erste Einrichtung, wobei die zweiten Anzeigeinformationen verwendet werden, um die Prioritäten der mindestens zwei Arten von Uplink-Steuerinformationen anzuzeigen.

10. Verfahren nach einem der Patentansprüche 7 bis 9, wobei ein Wert eines Index der grundlegenden Frequenzbereichseinheit direkt proportional zu einer Priorität der grundlegenden Frequenzbereichseinheit ist; oder ein Wert eines Index der grundlegenden Frequenzbereichseinheit umgekehrt proportional zu einer Priorität der grundlegenden Frequenzbereichseinheit ist.

11. Verfahren nach einem der Patentansprüche 7 bis 10, wobei die Priorität der grundlegenden Frequenzbereichseinheit vordefiniert ist oder in dritten Anzeigeinformationen enthalten ist, die von der zweiten Einrichtung gesendet werden.

12. Verfahren nach einem der Patentansprüche 7 bis 9, wobei die mindestens zwei grundlegenden Frequenzbereichseinheiten eine erste grundlegende Frequenzbereichseinheit umfassen, und die erste grundlegende Frequenzbereichseinheit eine Frequenzbereichseinheit, die von der ersten Vorrichtung in einer Zeiteinheit abgehört wird, oder eine grundlegende Frequenzbereichseinheit ist, deren Leerlaufwahrscheinlichkeit größer ist als ein voreingestellter Schwellenwert; und das Verfahren ferner umfasst:
Senden dritter Anzeigeinformation an die erste Einrichtung, wobei die dritten Anzeigeinformationen einen ersten Index der ersten grundlegenden Frequenzbereichseinheit umfassen.

13. Kommunikationseinrichtung, wobei die Kommunikationseinrichtung ein Modul umfasst, um das Verfahren nach einem der Patentansprüche 1 bis 6 oder 7 bis 12 durchzuführen.

14. Computerlesbares Speicherungsmedium, das ein Computerprogramm speichert, wobei, wenn das Computerprogramm laufen gelassen wird, das Verfahren nach einem der Patentansprüche 1 bis 6 oder 7 bis 12 implementiert wird.

15. Computerprogrammprodukt, das Computerprogrammcode einschließt, wobei, wenn der Computerprogrammcode laufen gelassen wird, das Verfahren nach einem der Patentansprüche 1 bis 6 oder 7 bis 12 durchgeführt wird.

## Revendications

1. Procédé d'envoi d'informations de commande de liaison montante, dans lequel le procédé est appliqué à un premier appareil au niveau d'un côté terminal et le procédé comprend :
la réception (S601) de premières informations d'indication en provenance d'un second appareil au niveau d'un côté réseau, dans lequel les premières informations d'indication sont utilisées pour indiquer une ressource attribuée par le second appareil au premier appareil, et la ressource attribuée appartient à au moins deux unités de domaine fréquentiel de base et est utilisée par le premier appareil pour effectuer une transmission de liaison montante ; et
l'envoi (S602) d'au moins un type d'informations de commande de liaison montante au second appareil sur la ressource attribuée, dans lequel l'au moins un type d'informations de commande de liaison montante est mis en correspondance avec la ressource attribuée sur la base de l'unité de domaine fréquentiel de base,
dans lequel l'au moins un type d'informations de commande de liaison montante est mis en correspondance avec les au moins deux unités de domaine fréquentiel de base sur la base de priorités des unités de domaine fréquentiel de base.

2. Procédé selon la revendication 1, dans lequel l'envoi d'au moins un type d'informations de commande de liaison montante au second appareil sur la ressource attribuée comprend :
la réalisation d'une écoute avant émission, LBT, sur la base de l'unité de domaine fréquentiel de base, pour déterminer une ressource inactive dans la ressource attribuée ; et
l'envoi de l'au moins un type d'informations de commande de liaison montante sur la ressource inactive.

3. Procédé selon la revendication 2, dans lequel l'au moins un type d'informations de commande de liaison montante comprend au moins deux types d'informations de commande de liaison montante, et les au moins deux types d'informations de commande de liaison montante sont mis en correspondance avec la ressource inactive sur la base de priorités des au moins deux types d'informations de commande de liaison montante ; et
les au moins deux types d'informations de commande de liaison montante comprennent une demande de répétition automatique hybride, HARQ, et des informations d'état de canal, CSI, et une priorité de la HARQ est supérieure à une priorité des CSI.

4. Procédé selon la revendication 2, dans lequel le procédé comprend en outre :
la réception de deuxièmes informations d'indication en provenance du second appareil, dans lequel les deuxièmes informations d'indication sont utilisées pour indiquer les priorités des au moins deux types d'informations de commande de liaison montante.

5. Procédé selon l'une quelconque des revendications 1 à 4, dans lequel une valeur d'un indice de l'unité de domaine fréquentiel de base est directement proportionnelle à une priorité de l'unité de domaine fréquentiel de base ; ou une valeur d'un indice de l'unité de domaine fréquentiel de base est inversement proportionnelle à une priorité de l'unité de domaine fréquentiel de base.

6. Procédé selon l'une quelconque des revendications 1 à 5, dans lequel la priorité de l'unité de domaine fréquentiel de base est prédéfinie ou est transportée dans des troisièmes informations d'indication envoyées par le second appareil.

7. Procédé de réception d'informations de commande de liaison montante, où le procédé est appliqué à un second appareil au niveau d'un côté réseau et le procédé comprend :
l'envoi (S601) de premières informations d'indication à un premier appareil au niveau d'un côté terminal, dans lequel les premières informations d'indication sont utilisées pour indiquer une ressource attribuée par le second appareil au premier appareil, et la ressource attribuée appartient à au moins deux unités de domaine fréquentiel de base et est utilisée par le premier appareil pour effectuer une transmission de liaison montante ; et
la réception (S602) d'au moins un type d'informations de commande de liaison montante en provenance du premier appareil sur la ressource attribuée, dans lequel l'au moins un type d'informations de commande de liaison montante est mis en correspondance avec la ressource attribuée sur la base de l'unité de domaine fréquentiel de base,
dans lequel l'au moins un type d'informations de commande de liaison montante est mis en correspondance avec les au moins deux unités de domaine fréquentiel de base sur la base de priorités des unités de domaine fréquentiel de base.

8. Procédé selon la revendication 7, dans lequel l'au moins un type d'informations de commande de liaison montante comprend au moins deux types d'informations de commande de liaison montante, et les au moins deux types d'informations de commande de liaison montante sont mis en correspondance avec une ressource inactive sur la base de priorités des au moins deux types d'informations de commande de liaison montante ; et
les au moins deux types d'informations de commande de liaison montante comprennent une demande de répétition automatique hybride, HARQ, et des informations d'état de canal, CSI, et une priorité de la HARQ est supérieure à une priorité des CSI.

9. Procédé selon la revendication 8, dans lequel le procédé comprend en outre :
l'envoi de deuxièmes informations d'indication au premier appareil, dans lequel les deuxièmes informations d'indication sont utilisées pour indiquer les priorités des au moins deux types d'informations de commande de liaison montante.

10. Procédé selon l'une quelconque des revendications 7 à 9, dans lequel une valeur d'un indice de l'unité de domaine fréquentiel de base est directement proportionnelle à une priorité de l'unité de domaine fréquentiel de base ; ou une valeur d'un indice de l'unité de domaine fréquentiel de base est inversement proportionnelle à une priorité de l'unité de domaine fréquentiel de base.

11. Procédé selon l'une quelconque des revendications 7 à 10, dans lequel la priorité de l'unité de domaine fréquentiel de base est prédéfinie ou est transportée dans des troisièmes informations d'indication envoyées par le second appareil.

12. Procédé selon l'une quelconque des revendications 7 à 9, dans lequel les au moins deux unités de domaine fréquentiel de base comprennent une première unité de domaine fréquentiel de base, et la première unité de domaine fréquentiel de base est une unité de domaine fréquentiel écoutée par le premier appareil dans une unité de temps ou une unité de domaine fréquentiel de base dont la probabilité d'inactivité est supérieure à un seuil prédéfini ; et le procédé comprend en outre :
l'envoi de troisièmes informations d'indication au premier appareil, dans lequel les troisièmes informations d'indication comprennent un premier indice de la première unité de domaine fréquentiel de base.

13. Appareil de communication, dans lequel l'appareil de communication comprend un module pour effectuer le procédé selon l'une quelconque des revendications 1 à 6 ou 7 à 12.

14. Support de stockage lisible par ordinateur stockant un programme informatique, dans lequel, lorsque le programme informatique est exécuté, le procédé selon l'une quelconque des revendications 1 à 6 ou 7 à 12 est mis en œuvre.

15. Produit-programme d'ordinateur comportant un code de programme informatique, dans lequel, lorsque le code de programme informatique est exécuté, le procédé selon l'une quelconque des revendications 1 à 6 ou 7 à 12 est effectué.
